# EUROPEAN PATENT APPLICATION

(11) **EP 3 614 358 A1**
(43) Date of publication of application: **26.02.2020**
(21) Application number: 18788395.4
(22) Date of filing: 23.01.2018
(51) Int. Cl.: G08G 1/00, G01C 21/26, G07C 5/00, H04N 7/18

(54) **RECORDING CONTROL DEVICE, RECORDING APPARATS, NAVIGATION APPARATUS, RECORDING METHOD, AND PROGRAM**

(30) Priority: 17.04.2017 JP 2017081297
(71) Applicant: JVCKENWOOD CORPORATION, Yokohama-shi, Kanagawa 2210022 (JP)
(72) Inventor: YAMADA Yasuo, Yokohama-shi Kanagawa 2210022 (JP); MURATA Toshitaka, Yokohama-shi Kanagawa 2210022 (JP); HAYASHI Keita, Yokohama-shi Kanagawa 2210022 (JP)
(74) Representative: Potter Clarkson
(86) International application number: PCT/JP2018/002023
(87) International publication number: WO 2018/193679

(57) **Abstract**

To provide a recording device enabling information to be acquired that enables a possibility of leading to identification of the cause of an accident to be raised. A recording device (10) according to the present embodiment includes an imaging data acquisition unit (21) configured to acquire imaging data obtained by capturing an outside or an inside of a vehicle, an event detection unit (22) configured to detect an occurrence of an event, a route information acquisition unit (26) configured to acquire route information for the vehicle, and a recording control unit (23) configured to, when the event detection unit (22) detects an occurrence of an event, record data in which the route information is included in the imaging data from a first timing before the occurrence of the event to a time point at which the event occurred as first recorded data.

## Description

### Technical Field

The present embodiment relates to a recording control device, a recording device, a navigation device, a recording method, and a program.

### Background Art

The number of vehicles equipped with an event data recorder has increased in recent years. An event data recorder is used as a recording device for recording imaging data by capturing situations inside or outside a vehicle. When a traffic accident happens, the data recorded in the event data recorder may, for example, be used in investigation of a cause of the accident. The event data recorder continues to constantly record imaging data which are captured with a camera or the like, for example, while the engine is running. For this reason, when data is fully recorded in a memory device up to its capacity, the event data recorder continues to record new imaging data by overwriting the existing imaging data with the new imaging data.

Patent Literature 1 discloses a configuration of a recording device that prevents important imaging data at the moment of occurrence of an event such as an accident from being overwritten with imaging data at a normal time when such an event does not occur. Specifically, according to the recording device disclosed in Patent Literature 1, when the vehicle is standing still after an occurrence of an accident, the recording is stopped and the overwriting on already recorded imaging data is thereby prevented.

### Citation List

### Patent Literature

[Patent Literature 1]
Japanese Unexamined Patent Application Publication No. 2016-100672

### Summary of Invention

The recording device disclosed in Patent Literature 1 records captured image data captured by a CCD camera, position data detected by a GPS receiver, and speed data detected by the GPS receiver. In order to identify the cause of an accident, it is desirable to acquire information that enables behavior of the vehicle at the time of the occurrence of the accident to be clarified. However, there is a problem in that it is sometimes difficult to clarify behavior of a vehicle for identification of the cause of an accident, based on only captured image data, position data, and speed data and such data does not lead to the identification of the cause of the accident.

The present embodiment provides a recording control device, a recording device, a navigation device, a recording method, and a program that enable information to be acquired that enables a possibility of leading to identification of the cause of an accident to be raised.

A first aspect of the present embodiment provides a recording control device including an imaging data acquisition unit configured to acquire imaging data obtained by capturing an outside or an inside of a vehicle, an event detection unit configured to detect an occurrence of an event, a route information acquisition unit configured to acquire route information for the vehicle, and a recording control unit configured to, when the event detection unit detects an occurrence of an event, record data in which the route information is included in the imaging data from a first timing before the occurrence of the event to a time point at which the event occurred as first recorded data.

A second aspect of the present embodiment provides a navigation device including an imaging data acquisition unit configured to acquire imaging data obtained by capturing an outside or an inside of a vehicle, an event detection unit configured to detect an occurrence of an event, a route setting unit configured to specify a route to a destination of the vehicle, based on set destination information, a route information acquisition unit configured to acquire route information for the vehicle, the route information being generated by the route setting unit, and a recording control unit configured to, when the event detection unit detects an occurrence of an event, record data in which the route information is included in the imaging data from a first timing before the occurrence of the event to a time point at which the event occurred as first recorded data.

A third aspect of the present embodiment provides a recording method in a recording device including acquiring imaging data obtained by capturing an outside or an inside of a vehicle, acquiring route information for the vehicle, detecting an occurrence of an event, and, when an occurrence of an event is detected, recording data in which the route information is included in the imaging data from a first timing before the occurrence of the event to a time point at which the event occurred as first recorded data.

A fourth aspect of the present embodiment provides a program for causing a computer to execute the following processing of acquiring imaging data obtained by capturing an outside or an inside of a vehicle, acquiring route information for the vehicle, detecting an occurrence of an event, and, when an occurrence of an event is detected, recording data in which the route information is included in the imaging data from a first timing before the occurrence of the event to a time point at which the event occurred as first recorded data.

The present embodiment enables a recording control device, a recording device, a navigation device, a recording method, and a program to be provided that enable information to be acquired that enables a possibility of leading to identification of the cause of an accident to be raised.

### Brief Description of Drawings

Fig. 1 is a configuration diagram of a recording device according to a first embodiment;
Fig. 2 is a diagram describing a video image displayed on a display unit according to the first embodiment;
Fig. 3 is a diagram illustrating a relationship between data recorded in a recording unit and data recorded in a buffer memory according to the first embodiment;
Fig. 4 is a diagram illustrating a flow of recording processing to record recorded data according to the first embodiment;
Fig. 5 is a configuration diagram of a recording device according to a second embodiment;
Fig. 6 is a diagram describing a video image displayed on a display unit according to the second embodiment;
Fig. 7 is a diagram describing another video image displayed on the display unit according to the second embodiment;
Fig. 8 is a diagram illustrating a flow of recording processing to record recorded data according to the second embodiment; and
Fig. 9 is a configuration diagram of a navigation device according to a third embodiment.

### Description of Embodiments

### (First Embodiment)

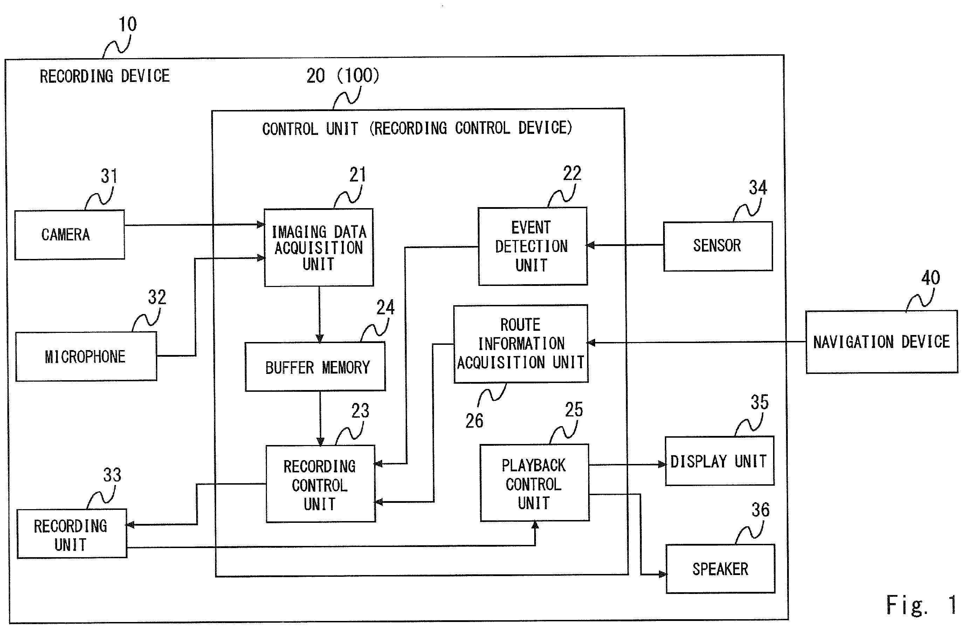

Hereinafter, a mode of embodiment of the present embodiment will be described with reference to the drawings. A configuration example of a recording device 10 according to a first embodiment will be described with reference to Fig. 1. The recording device 10 may be used, for example, as an event data recorder mounted on a vehicle. The recording device 10 may be a computer device operated by its processor executing a program stored in its memory unit. The processor may be, for example, a microprocessor, a micro processing unit (MPU), or a central processing unit (CPU). The memory unit may be a volatile memory unit or a non-volatile memory unit, or may be configured by combination of a volatile memory unit and a non-volatile memory unit. The processor executes one or more programs including a set of instructions for causing the computer to perform algorithms that will be described hereinbelow with reference to the drawings.

The recording device 10 includes a control unit 20, a camera 31, a microphone 32, a recording unit 33, a sensor 34, a display unit 35, and a speaker 36. The control unit 20 may be directly connected to the camera 31, the microphone 32, the recording unit 33, the sensor 34, the display unit 35, and the speaker 36 using a predetermined cable or the like or may be connected thereto via a controller area network (CAN) that is an in-vehicle network. In addition, a configuration including the constituent components achieved by the control unit 20 may be referred to as a recording control device 100. Specifically, the recording control device 100 includes an imaging data acquisition unit 21, an event detection unit 22, and a recording control unit 23. In addition, the recording device 10 is connected to a navigation device 40. The recording device 10 and the navigation device 40 may be interconnected using a cable enabling communication therebetween or may be interconnected by, for example, a wireless communication line.

The navigation device 40 is a device that specifies a route to a destination that a vehicle user inputs and provides the vehicle user with guidance on the route. The navigation device 40 generates route information when the navigation device 40 specifies a route to a destination that the vehicle user has input. In the route information, information relating to a scheduled time at which the vehicle passes an arbitrary point along the route to the destination may be included. Further, in the route information, at least one of traveling direction information, recommended lane information, via-point information, and destination information for the vehicle along the specified route may be included. The navigation device 40 may periodically update the route information. For example, when a change arises in a scheduled time at which the vehicle passes an arbitrary point along the route to the destination, the scheduled time may be changed. Further, when the vehicle selects a route different from the specified route and a change thus arises in the route to the destination, a new route may be specified. In this case, the navigation device 40 may generate traveling direction information, recommended lane information, via-point information, and destination information for the vehicle along the newly specified route. In addition, the navigation device 40 may be a device mounted on a vehicle, a portable device, or an information terminal equipped with a navigation function.

The camera 31 is configured to generate video data that capture an inside of the vehicle or an outside of the vehicle. The microphone 32 is configured to collect sounds inside the vehicle or outside the vehicle and generate audio data. The recording unit 33, which may be a hard disk, a card-type memory device, or the like, is configured to record the video data and the audio data. The camera 31 may be a single camera or a plurality of cameras. When the recording device 10 is used as an event data recorder, various configurations of the camera 31, such as a single camera capturing the forward direction outside the vehicle, a plurality of cameras capturing the forward direction and the rearward direction outside the vehicle, a plurality of cameras capturing the inside of the vehicle and the outside of the vehicle, and a single super-wide angle camera capturing the inside of the vehicle and the outside of the vehicle, are applicable.

The sensor 34, which is, for example, an acceleration sensor, is configured to detect impact or the like generated when a vehicle on which the recording device 10 is mounted causes an accident or is involved in an accident. Further, the sensor 34 may be configured to detect speed and the like of the vehicle. The display unit 35 may be a display device that plays back video data recorded in the recording unit 33. The speaker 36 is configured to play back audio data recorded in the recording unit 33. The speaker 36 includes an audio amplification unit and a sound processing unit (not illustrated) at the previous stage of input to the speaker 36 and the speaker 36 includes these units even when this component is only indicated as "speaker 36".

Next, a configuration example of the control unit 20 will be described. The control unit 20 includes an imaging data acquisition unit 21, an event detection unit 22, a recording control unit 23, a buffer memory 24, a playback control unit 25, and a route information acquisition unit 26. Each of the constituent components constituting the control unit 20, such as the imaging data acquisition unit 21, the event detection unit 22, the recording control unit 23, the playback control unit 25, and the route information acquisition unit 26, may be a software component or module the processing of which is performed by the processor executing a program stored in the memory unit. Alternatively, each of the constituent components constituting the control unit 20 may be a hardware component, such as a circuit and a chip.

The imaging data acquisition unit 21 is configured to acquire video data generated by the camera 31 and audio data generated by the microphone 32. Data including video data and audio data may be referred to as "imaging data". That is, it may be rephrased that the imaging data acquisition unit 21 is configured to acquire imaging data from the camera 31 and the microphone 32. The video data may be generated using a scheme such as H.264, H.265, or the like. In addition, the audio data may be generated using a pulse code modulation (PCM) scheme or the like, and the imaging data, which is moving image data including video data and audio data, may be generated using a moving picture experts group (MPEG)-2 transport stream (TS) scheme, an audio video interleave (AVI) scheme, or the like.

The imaging data acquisition unit 21 is configured to output imaging data including video data and audio data to the buffer memory 24. The buffer memory 24 is configured to temporarily store the output imaging data. The buffer memory 24 may be referred to as a built-in memory unit incorporated in the control unit 20. To temporarily store imaging data in this context may mean, for example, that the buffer memory 24 erases the imaging data after a lapse of a predetermined period. Alternatively, to temporarily store imaging data may mean storing data output from the imaging data acquisition unit 21 in the buffer memory 24 by overwriting data in the buffer memory 24 with the output data. Still alternatively, to temporarily store imaging data may mean that, when the buffer memory 24 outputs imaging data to the recording control unit 23, the buffer memory 24 erases the imaging data that have been output from the imaging data acquisition unit 21.

The event detection unit 22 is configured to detect an occurrence of an event, using information output from the sensor 34. For example, when an impact level detected by the sensor 34 operating as an acceleration sensor exceeds a predetermined value, the event detection unit 22 detects an occurrence of an event "traffic accident". An impact level exceeding a predetermined value may be rephrased as acceleration exceeding a predetermined value. The event detection unit 22, upon detection of an occurrence of an event, outputs information indicating the occurrence of the event to the recording control unit 23. The information indicating the occurrence of the event includes a time point at which the event occurred. Further, the information indicating the occurrence of the event may include details of the event that occurred.

The route information acquisition unit 26 acquires route information from the navigation device 40. The route information acquisition unit 26 may periodically acquire route information from the navigation device 40. Alternatively, when route information is changed or updated in the navigation device 40, the route information acquisition unit 26 acquires the route information after the change or update from the navigation device 40. The route information is route guidance information corresponding to each imaging time point or each imaging frame in the imaging data. Specific examples of the route information include traveling direction guidance, lane change guidance, and the like at an intersection or a forked road that is being approached or located at a present ) position.

The recording control unit 23 is configured to record imaging data stored in the buffer memory 24 into the recording unit 33 in a form of file. When the recording control unit 23 starts to record data into the recording unit 33 caused by an event that has been detected by the event detection unit 22, the recording control unit 23 records data including imaging data acquired from the buffer memory 24 and route information acquired from the route information acquisition unit 26 into the recording unit 33 as first recorded data. Specifically, the recording control unit 23, using imaging data stored in the buffer memory 24 and route information acquired from the route information acquisition unit 26, generates a moving image file including video data and audio data and records the generated moving image file into the recording unit 33. The moving image file is equivalent to the first recorded data. As another specific example, the recording control unit 23 records imaging data stored in the buffer memory 24 and route information acquired from the route information acquisition unit 26 into the recording unit 33 as first recorded data made up of the imaging data and the route information.

When the recording control unit 23 starts to record data into the recording unit 33 not caused by an event that has been detected by the event detection unit 22, the recording control unit 23 records only imaging data acquired from the buffer memory 24 into the recording unit 33 as second recorded data. That is, the recording control unit 23 records second recorded data that include imaging data but does not include route information into the recording unit 33. In addition, when the recording control unit 23 starts to record data into the recording unit 33 not caused by an event that has been detected by the event detection unit 22, the recording control unit 23 may record, among imaging data acquired from the buffer memory 24, only video data or only audio data into the recording unit 33. Data to be recorded in the recording unit 33 not caused by an event has a low possibility of being used for identification of the cause of an accident. For this reason, when the recording control unit 23 records data into the recording unit 33 not caused by an event, the recording control unit 23 may record only either video data or audio data into the recording unit 33 in order to reduce data capacity to be recorded. In addition, when the recording control unit 23 records only video data into the recording unit 33, the recording control unit 23 may replace audio data with soundless audio data, generate a moving image file from the soundless audio data in conjunction with the video data, and record the moving image file into the recording unit 33. Hereinafter, when data to be recorded is described only as recorded data, it does not matter whether both or either of the first recorded data and the second recorded data are referred to.

When the recording control unit 23 records first recorded data including imaging data and route information into the recording unit 33 caused by an event, the recording control unit 23 records the first recorded data into the recording unit 33 as data that are prohibited from being overwritten. For example, the recording control unit 23 may specify an address in a memory area in the recording unit 33 where data therein are prohibited from being overwritten and record the first recorded data at the address in the recording unit 33. Alternatively, the recording control unit 23 may set flag information or the like indicating that overwriting is prohibited in the header or the payload of the first recorded data.

In addition, when the recording control unit 23 records second recorded data into the recording unit 33 not caused by an event, the recording control unit 23 may record the second recorded data that includes only imaging data into the recording unit 33 as data that are allowed to be overwritten. For example, the recording control unit 23 may specify an address in a memory area in the recording unit 33 where data therein are allowed to be overwritten and record the second recorded data at the address in the recording unit 33. Alternatively, the recording control unit 23 may set flag information indicating that overwriting is allowed in the header or the payload of the second recorded data.

The recording unit 33 records data that are output from the recording control unit 23, in other words, data that are transferred from the buffer memory 24 and the route information acquisition unit 26 via the recording control unit 23 or data that are transferred from the buffer memory 24. The recording unit 33 may be a unit that is incorporated in the recording device 10, a unit that is removable from the recording device 10, or an external device to which data are transmitted by a wired or wireless communication unit constituted by a not-illustrated communication unit.

The playback control unit 25 is configured to acquire recorded data recorded in the recording unit 33 and output video data based on the acquired recorded data to the display unit 35 and output audio data based on the acquired recorded data to the speaker 36 or the like.

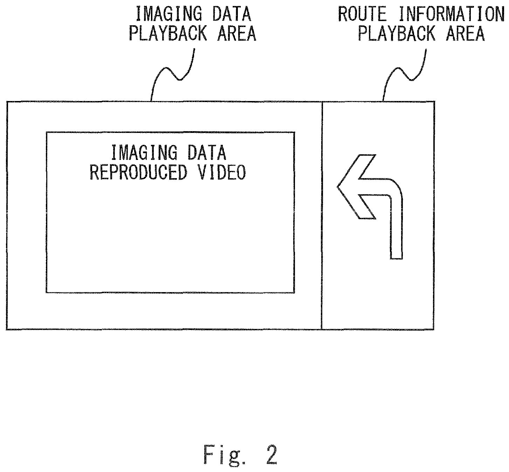

With reference to Fig. 2, a video image displayed on the display unit 35 will now be described. Fig. 2 illustrates a played back video image of first recorded data that are recorded caused by an event. In the first recorded data, imaging data captured by the imaging data acquisition unit 21 and route information acquired by the route information acquisition unit 26 are included. Therefore, the imaging data and the route information are also included in the video image played back by the playback control unit 25 and displayed on the display unit 35. Specifically, as illustrated in Fig. 2, the video image displayed on the display unit 35 includes an imaging data playback area and a route information playback area. In the imaging data playback area, the imaging data acquired by the imaging data acquisition unit 21 are played back. In addition, in the route information playback area, the route information is played back.

The video image displayed in the route information playback area is route information that was provided as guidance to the vehicle user at the same timing as a timing at which the imaging data to be displayed on the imaging data playback area were captured. That is, in the route information playback area on the display unit 35, traveling direction information, recommended lane information, or the like is displayed that was notified to the vehicle user while the vehicle was traveling at a spot imaged in the video image displayed in the imaging data playback area.

Although, in Fig. 2, information relating to traveling direction of the vehicle is displayed in the route information playback area, another type of route information may be displayed therein. Alternatively, in the route information playback area, two or more types of information included in the route information may be displayed. In addition, route information displayed in the route information playback area may be displayed using a symbol as illustrated in Fig. 2 or may be displayed using letters and/or characters.

Returning to Fig. 1, although Fig. 1 illustrates a configuration in which the recording device 10 includes the playback control unit 25, the display unit 35, and the speaker 36, a playback device or the like different from the recording device 10 may include the playback control unit 25, the display unit 35, and the speaker 36. In other words, the recording device 10 does not have to include the playback control unit 25, the display unit 35, and the speaker 36. That is, a playback device or the like that includes the playback control unit 25, the display unit 35, and the speaker 36 may play back data recorded in the recording unit 33 of the recording device 10. For example, the playback device or the like may be a device that plays back data recorded in a portable recording medium, such as an optical disc or a card-type recording medium. Data recorded in the recording unit 33 may be transferred to such a portable recording medium. Even when first recorded data are played back by another playback device or the like, the first recorded data are displayed as illustrated in Fig. 2.

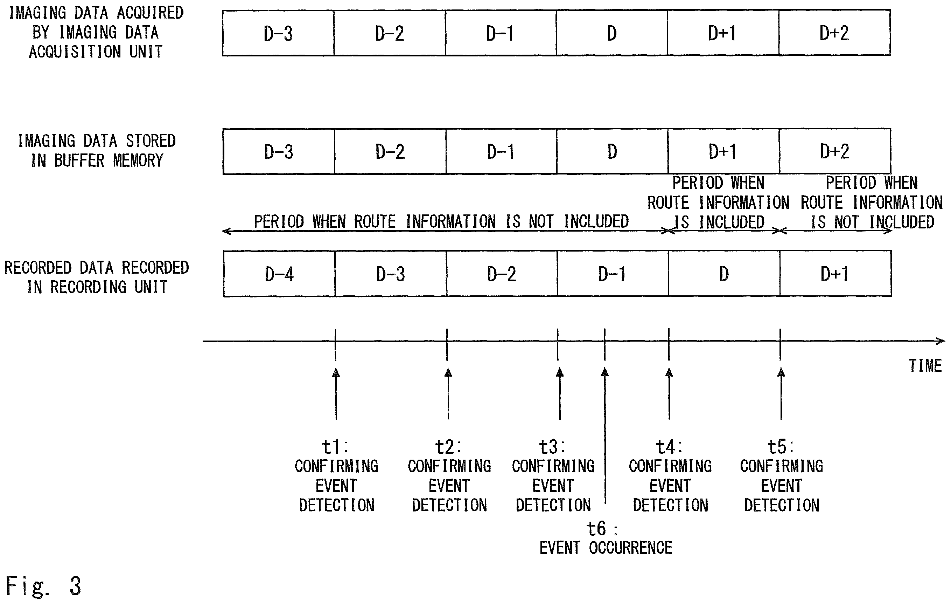

A relationship between data recorded in the recording unit 33 and data recorded in the buffer memory 24 will now be described with reference to Fig. 3. The horizontal axis illustrated in Fig. 3 represents the passage of time. Each of symbols D-4 to D+2 indicates a piece of imaging data captured in a predetermined period. In Fig. 3, D-4 is the least recently captured imaging data and D+2 is the most recently captured imaging data. The predetermined period may be, for example, several seconds, several tens of seconds, several minutes, and the like.

Imaging data that have been acquired by the imaging data acquisition unit 21 are immediately output to the buffer memory 24. Thus, Fig. 2 illustrates that imaging data that have been acquired by the imaging data acquisition unit 21 are stored in the buffer memory 24 without any intermediate processing. In other words, Fig. 2 illustrates that timings at which the imaging data acquisition unit 21 acquired imaging data are substantially coincident with timings at which the imaging data were stored in the buffer memory 24. The substantial coincidence in this context also includes a case where timings at which the imaging data acquisition unit 21 acquired imaging data are not completely coincident with timings at which the imaging data were stored in the buffer memory 24. For example, the substantial coincidence may encompass a case where a timing at which a piece of imaging data is stored in the buffer memory 24 is delayed from a timing at which the imaging data acquisition unit 21 acquires the piece imaging data. Meanwhile, recorded data to be recorded into the recording unit 33, after imaging data have been temporarily stored in the buffer memory 24, are recorded into the recording unit 33 by the recording control unit 23. Therefore, timings at which the imaging data acquired by the imaging data acquisition unit 21 are stored in the buffer memory 24 are different from timings at which the recorded data are recorded into the recording unit 33. Specifically, the timings at which the recorded data are recorded into the recording unit 33 are later than the timings at which the imaging data are stored in the buffer memory 24.

Symbols t1 to t6 indicate time points. The recording control unit 23 determines whether or not an event occurred in a past predetermined period at each of the time points t1 to t6. For example, the recording control unit 23 determines, at the time point t2, whether or not an event occurred in the period from the time point t1 to the time point t2. The recording control unit 23 likewise determines, at other time points, whether or not an event occurred in the preceding periods. In Fig. 3, the recording control unit 23, at the time points t1 to t3 and t5, determines that no event has occurred. In addition, the recording control unit 23, at the time point t4, determines that an event occurred at a time point t6 in the period from the time point t3 to the time point t4.

For example, when the recording control unit 23 determines, at the time point t2, that no event has occurred in the period from the time point t1 to the time point t2, the recording control unit 23 forms the imaging data D-2 stored in the buffer memory 24 into a file and records the file into the recording unit 33. On the other hand, the recording control unit 23 determines, at the time point t4, that an event occurred at the time point t6 in the period from the time point t3 to the time point t4. In this case, the recording control unit 23 records, into the recording unit 33, first recorded data obtained by forming the data D acquired by the imaging data acquisition unit 21 during the period from the time point t3 to the time point t4, including the time point t6, and route information notified to the vehicle user during the period from the time point t3 to the time point t4 into a file. The route information included in the first recorded data may be route information that had been notified to the vehicle user since an arbitrary timing earlier than the time point t6 until the time point t6. Alternatively, the route information included in the first recorded data may be route information that had been notified to the vehicle user since the time point t3 until the time point t6 or route information immediately before the time point t6.

While Fig. 3 illustrates that imaging data the storing of which to the buffer memory 24 is completed are instantaneously recorded into the recording unit 33, a timing at which imaging data recorded in the buffer memory 24 are recorded into the recording unit 33 is not limited to the timing illustrated in Fig. 3. For example, the recording control unit 23 may acquire imaging data that are in the midst of being stored into the buffer memory 24 and record the acquired imaging data into the recording unit 33. Alternatively, when storing of imaging data into the buffer memory 24 is completed, the recording control unit 23 may record the imaging data into the recording unit 33 after a predetermined period has elapsed since the time point at which the storing of the imaging data was completed. In the above description, the imaging data are assumed to be any one of D-4 to D+2 illustrated in Fig. 3.

In addition, Fig. 3 illustrates that the recording control unit 23 records, into the recording unit 33, first recorded data that include imaging data acquired by the imaging data acquisition unit 21 in a period including a time point at which an event occurred and route information notified to the vehicle user in the period including the time point at which the event occurred. Without being limited to this configuration, the recording control unit 23 may, for example, record, into the recording unit 33, first recorded data that include, in addition to the imaging data acquired by the imaging data acquisition unit 21 in the period including the time point at which the event occurred and the route information notified to the vehicle user in the period including the time point at which the event occurred, imaging data acquired by the imaging data acquisition unit 21 in a period previous to the period including the time point at which the event occurred and route information notified to the vehicle user in the period previous to the period including the time point at which the event occurred. For example, the recording control unit 23 may record, into the recording unit 33, first recorded data that include, in addition to the data D acquired by the imaging data acquisition unit 21 at the time point t6 and the route information notified to the vehicle user at the time point t6, the data D-1 acquired by the imaging data acquisition unit 21 during the period from the time point t2 to the time point t3 and the route information notified to the vehicle user during the period from the time point t2 to the time point t3.

In addition, even when the recording control unit 23 determines that no event has occurred, the recording control unit 23 may record, into the recording unit 33, imaging data acquired in a period previous to the latest period in addition to imaging data acquired in the latest period and stored in the buffer memory 24.

In Fig. 3, the periods in which the data D-4 to D-1 are recorded into the recording unit 33 and the period in which the data D+1 are recorded into the recording unit 33 are defined as periods in which route information is not included and the period in which data D are recorded into the recording unit 33 is defined as a period in which route information is included.

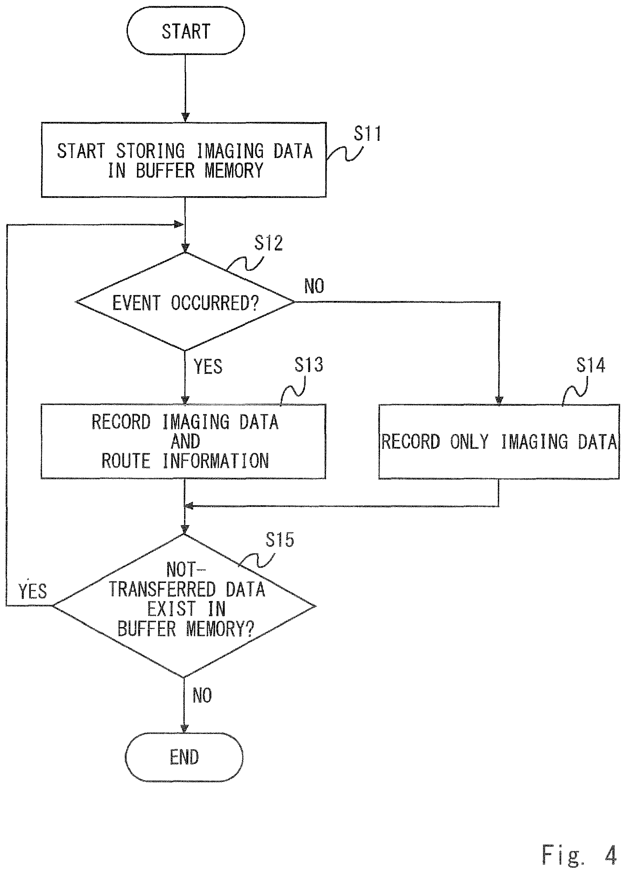

Next, a flow of recording processing to record recorded data according to the first embodiment will be described with reference to Fig. 4. First, the imaging data acquisition unit 21 outputs imaging data including video data and audio data to the buffer memory 24 and the buffer memory 24 starts storing the imaging data (S11). Next, the recording control unit 23, before starting to record the imaging data stored in the buffer memory 24 into the recording unit 33, determines whether or not an event has occurred (S12). Specifically, the recording control unit 23 determines whether or not an event has occurred in the capturing period of the imaging data to be transferred. For example, the recording control unit 23 determines whether or not an occurrence of an event has been detected by the event detection unit 22 in the capturing period of the imaging data to be transferred.

When the recording control unit 23 determines that an event has occurred, the recording control unit 23 records first recorded data that include imaging data the capturing period of which includes the timing at which the event occurred and route information notified to the vehicle user during the capturing period of the imaging data into the recording unit 33 (S13). The first recorded data recorded in step S13 is a moving image file that includes imaging data and route information. In other words, the recording control unit 23 adds route information to imaging data stored in the buffer memory 24, forms the data and information into a file, and records the first recorded data formed into a file into the recording unit 33.

When the recording control unit 23 determines that no event has occurred, the recording control unit 23 records imaging data captured in the period in which no event has occurred into the recording unit 33 as second recorded data (S14). The recording control unit 23 forms the imaging data stored in the buffer memory 24 into a file and records the second recorded data formed into a file into the recording unit 33.

The recording control unit 23, after having recorded the imaging data stored in the buffer memory 24 into the recording unit 33 in step S13 or S14, determines whether or not imaging data that have not been recorded into the recording unit 33 exist in the buffer memory 24 (S15).

When the recording control unit 23 determines that no imaging data that have not been recorded into the recording unit 33 exist in the buffer memory 24, the recording control unit 23 terminates the processing. Cases where no imaging data that have not been recorded into the recording unit 33 exist in the buffer memory 24 include, for example, a case where the driver performed an operation to stop the video-capturing, a case where the engine has been stopped and the video-capturing has been stopped, and the like.

When the recording control unit 23 determines that imaging data that have not been recorded into the recording unit 33 exist in the buffer memory 24, the recording control unit 23 repeats the processing in step S12 and subsequent steps.

As described in the foregoing, the recording device 10 according to the first embodiment is capable of recording imaging data the capturing period of which includes a timing at which an event occurred and route information notified to the vehicle user during the capturing period into the recording unit 33. In addition, with regard to imaging data captured in a period in which no event has occurred, the recording device 10 is capable of recording only the imaging data into the recording unit 33. This capability enables the recording device 10 to, when an event, such as a traffic accident, occurs, make the first recorded data, including imaging data and route information before the occurrence of the event, contribute to identification of the cause of the accident and the like. In addition, in a period in which no event has occurred, the recording device 10 may record only video data included in the imaging data into the recording unit 33. Recording only video data included in the imaging data into the recording unit 33 causes audio data that may include an utterance by the driver, a conversation between the driver and a passenger, or the like to be erased from the imaging data, which enables privacy of the driver and the passenger to be protected.

### (Second Embodiment)

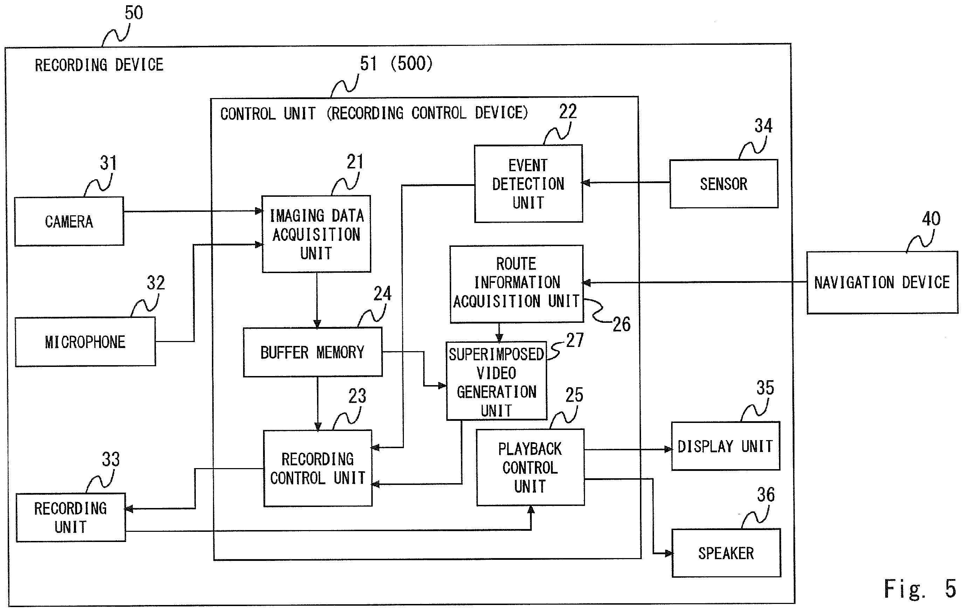

Next, a configuration example of a recording device 50 according to a second embodiment will be described with reference to Fig. 5. The recording device 50 includes a control unit 51 in place of the control unit 20 in the recording device 10 in Fig. 1. In addition, the control unit 51 has a configuration in which a superimposed-video generation unit 27 is added to the control unit 20 in Fig. 1. In the recording device 50, the same reference signs are given to the same constituent components as those of the recording device 10, and detailed descriptions thereof will be omitted. The following descriptions focus on features of the recording device 50 different from those of the recording device 10. The recording device 50 may, as with the recording device 10, have a configuration including constituent components achieved by the control unit 51 as a recording control device 500. Specifically, the recording control device 500 includes an imaging data acquisition unit 21, an event detection unit 22, a recording control unit 23, a route information acquisition unit 26, and a superimposed-video generation unit 27.

The superimposed-video generation unit 27 acquires route information and imaging data from the route information acquisition unit 26 and a buffer memory 24, respectively. The superimposed-video generation unit 27 generates superimposed video data in such a way that route information is displayed superimposed on a portion of a video image of the imaging data to be played back on a display unit 35. Route information to be superimposed on a portion of the video image of the imaging data is information that was notified to a vehicle user on the occasion when the imaging data were captured. The superimposed-video generation unit 27 is configured to output generated superimposed video data to the recording control unit 23. The superimposed-video generation unit 27 may generate superimposed data in such a way that a piece of route information among a plurality of pieces of information included in the route information is displayed superimposed on a portion of the video image of the imaging data. Alternatively, the superimposed-video generation unit 27 may generate superimposed data in such a way that two or more pieces of route information among the plurality of pieces of information included in the route information are displayed superimposed on a portion of the video image of the imaging data.

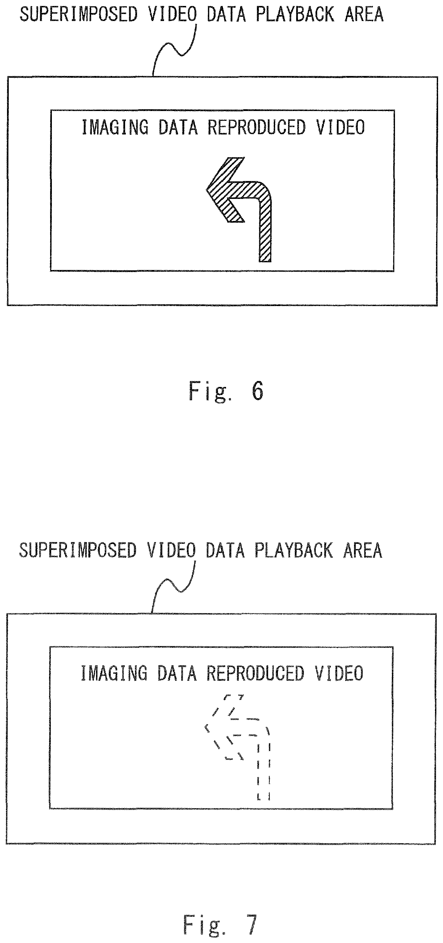

With reference to Fig. 6, an example of an image in the superimposed video data displayed on the display unit 35 will now be described. Fig. 6 illustrates an example in which route information indicated by an arrow is superimposed on a portion of the video image of the imaging data. The position in the video image of the imaging data at which route information is superimposed is not limited to the position illustrated in Fig. 6. In addition, a superimposed video data playback area where the superimposed video data are played back may have a size covering both the imaging data playback area and the route information playback area illustrated in Fig. 2.

Further, with reference to Fig. 7, another example of an image, different from Fig. 6, in the superimposed video data will be described. Fig. 7 illustrates that route information indicated by an arrow is displayed transparently. That is, in Fig. 7, only the outline of the arrow is displayed and, in the region inside the arrow, the video image of the imaging data is displayed. Displaying route information transparently in this manner enables the video image of the imaging data to be made easier to see than in a case where the route information is not displayed transparently. In addition, displaying route information transparently enables a portion of the video image of the imaging data where route information is superimposed to be displayed.

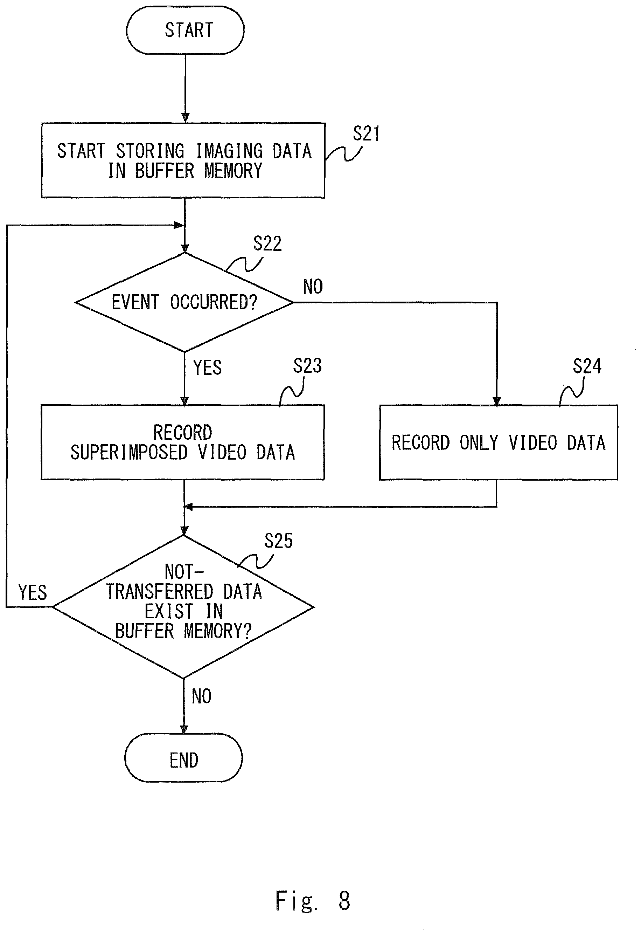

Next, a flow of recording processing to record recorded data according to the second embodiment will be described with reference to Fig. 8. Since steps S21 and S22 are similar to steps S11 and S12 in Fig. 4, respectively, detailed descriptions thereof will be omitted.

When the recording control unit 23 determines, in step S22, that an event has occurred, the recording control unit 23 records superimposed video data output from the superimposed-video generation unit 27 into the recording unit 33 as first recorded data (S23). The recording control unit 23 forms the superimposed video data into a file and records the superimposed video data formed into a file into the recording unit 33. In other words, when the recording control unit 23 determines that an event has occurred, the recording control unit 23 selects the superimposed video data out of the superimposed video data output from the superimposed-video generation unit 27 and the imaging data output from the buffer memory 24 and records the selected superimposed video data into the recording unit 33. Alternatively, when the recording control unit 23 determines that an event has occurred, the recording control unit 23 makes the superimposed-video generation unit 27 generate superimposed video from the video data to be recorded as first recorded data and records the generated superimposed video into the recording unit 33. On this occasion, the recording control unit 23 may record, in addition to the superimposed video, the imaging data on which no route information is superimposed into the recording unit.

When the recording control unit 23 determines, in step S22, that no event has occurred, the recording control unit 23 records imaging data output from the buffer memory 24 into the recording unit 33 as second recorded data (S24). In other words, when the recording control unit 23 determines that no event has occurred, the recording control unit 23 selects the imaging data out of the superimposed video data output from the superimposed-video generation unit 27 and the imaging data output from the buffer memory 24 and records the selected imaging data into the recording unit 33. Alternatively, when the recording control unit 23 determines that no event has occurred, the recording control unit 23 does not make the superimposed-video generation unit 27 perform superimposed video generation processing and records the imaging data output from the buffer memory 24 into the recording unit 33.

Since step S25 is similar to step S15 in Fig. 4, a detailed description thereof will be omitted.

As described in the foregoing, the recording device 50 according to the second embodiment is capable of generating superimposed video data in which route information is superimposed on a portion of a video image that is displayed when imaging data are played back. A superimposed video data playback area where the superimposed video data are played back has a size covering both the imaging data playback area and the route information playback area illustrated in Fig. 2. For this reason, it is possible to display the imaging data in a large size in the superimposed video data playback area, or it is possible to display an area that could not be displayed with the layout in Fig. 2. As a result, the superimposed video data include a lot of information that can contribute to determination of the truth of an accident compared with the first recorded data in the first embodiment and enable a possibility of leading to determination of the truth of the accident to be raised.

In addition, displaying transparently route information displayed when superimposed video data are played back enables imaging data to be made further easier to see. Because of this effect, the superimposed video data the route information of which is displayed transparently can further raise a possibility of leading to determination of the truth of an accident.

### (Third Embodiment)

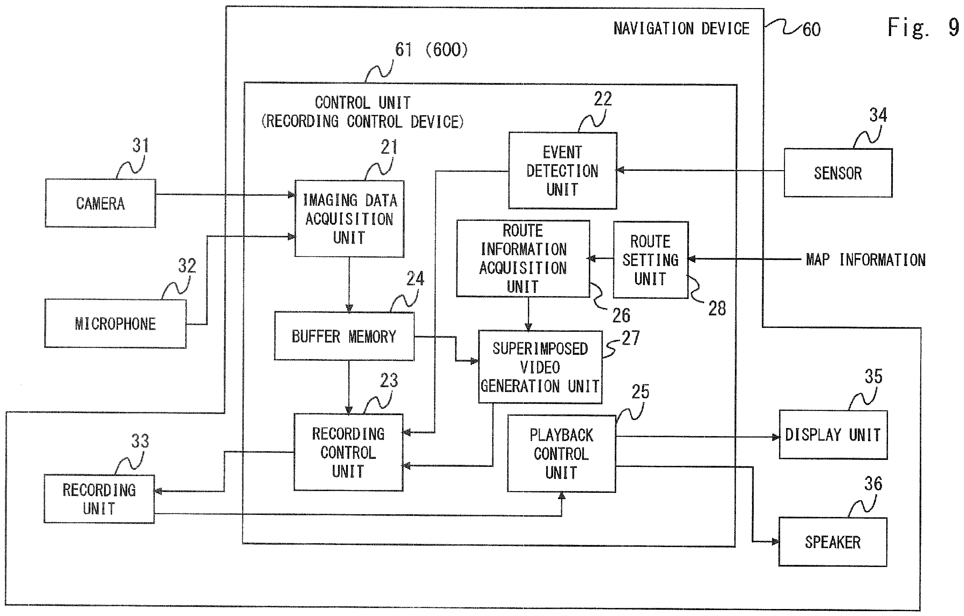

Next, a configuration example of a navigation device 60 according to a third embodiment will be described with reference to Fig. 9. Although, in the first and second embodiments, a configuration in which the recording device and the navigation device 40 operate in a cooperative manner was described, a configuration in which the recording device 10 or the recording device 50 in the first and second embodiment and the navigation device 40 are configured integrally with each other will be described in the third embodiment.

The navigation device 60 includes a control unit 61, a recording unit 33, a display unit 35, and a speaker 36. The control unit 61 has a configuration in which a route setting unit 28 is added to the control unit 51 illustrated in Fig. 5. With regard to the navigation device 60, the same reference signs are given to the same constituent components as those of the recording device 10 and the recording device 50, and detailed descriptions thereof will be omitted. Even when employing such a configuration, a configuration including the constituent components achieved by the control unit 61 may be referred to as a recording control device 600. The following descriptions focus on features of the navigation device 60 different from those of the recording device 10 and the recording device 50.

The route setting unit 28, using map information input via a network, a recording medium, or the like and destination information input by a user, specifies a route to a destination. Further, the route setting unit 28 generates route information and outputs the generated route information to a route information acquisition unit 26.

Although, in Fig. 9, a configuration in which a camera 31, a microphone 32, and a sensor 34 are external devices of the navigation device 60 and operate in a cooperative manner with the navigation device 60 is illustrated, the 31, the microphone 32, and the sensor 34 may be included in the navigation device 60.

As described in the foregoing, the navigation device 60 according to the third embodiment includes the control unit 61. For this reason, the navigation device 60 is capable of generating superimposed video data including imaging data and route information at the time of an event occurrence.

The recording control devices (100, 500, and 600), the recording devices (10 and 50), and the navigation device 60 according to the above-described respective embodiments have the following specific advantageous effects. For example, when event recording is performed based on an accident caused by a vehicle having made a lane change or having deviated to one side of a driving lane, the first recorded data to which the present embodiment is applied makes it possible to determine that the reason for the lane change and the deviation within a driving lane was preparation for a right or left turn. In addition, when event recording is performed based on an accident in an intersection, the first recorded data to which the present embodiment is applied makes it possible to determine in which direction the vehicle was traveling.

In the above-described examples, programs can be stored using various types of non-transitory computer readable media and supplied to a computer. The non-transitory computer readable media include various types of tangible storage media. Examples of the non-transitory computer readable media include a magnetic recording medium (for example, a flexible disc, a magnetic tape, and a hard disk drive), a magneto-optical recording medium (for example, a magneto-optical disc), a CD-read only memory (ROM), a CD-R, a CD-R/W, and a semiconductor memory (for example, a mask ROM, a programmable ROM (PROM), an erasable PROM (EPROM), a flash ROM, and a random access memory (RAM)). In addition, programs may be supplied to the computer by various types of transitory computer readable media. Examples of the transitory computer readable media include electrical signals, optical signals, and electromagnetic waves. A transitory computer readable medium can supply programs to a computer via a wired communication channel, such as an electrical wire and an optical fiber, or a wireless communication channel.

It should be noted that the present embodiment is not limited to the above-described embodiments and can be appropriately modified as long as the modification does not deviate from the scope of the present embodiment.

This application is based upon and claims the benefit of priority from Japanese Patent Application No. 2017-081297, filed on April 17, 2017, the disclosure of which is incorporated herein in their entirety by reference.

### Industrial Applicability

The present application can be applied to a recording device that records imaging data.

### Reference Signs List

- 10:: recording device
- 20:: control unit
- 21:: imaging data acquisition unit
- 22:: event detection unit
- 23:: recording control unit
- 24:: buffer memory
- 25:: playback control unit
- 26:: route information acquisition unit
- 27:: superimposed-video generation unit
- 28:: route setting unit
- 31:: camera
- 32:: microphone
- 33:: recording unit
- 34:: sensor
- 35:: display unit
- 36:: speaker
- 40:: navigation device
- 50:: recording device
- 51:: control unit
- 60:: navigation device
- 61:: control unit
- 100, 500, 600:: recording control device

## Claims

1. A recording control device comprising:
an imaging data acquisition unit configured to acquire imaging data obtained by capturing an outside or an inside of a vehicle;
an event detection unit configured to detect an occurrence of an event;
a route information acquisition unit configured to acquire route information for the vehicle; and
a recording control unit configured to, when the event detection unit detects an occurrence of an event, record data in which the route information is included in the imaging data from a first timing before the occurrence of the event to a time point at which the event occurred as first recorded data.

2. The recording control device according to Claim 1, wherein the recording control unit records the imaging data and the route information from a first timing before the occurrence of the event to a time point at which the event occurred as first recorded data.

3. The recording control device according to Claim 1 or 2, further comprising a superimposed-video generation unit configured to generate superimposed video data in which the route information is superimposed on the imaging data,
wherein the recording control unit records the superimposed video data as the first recorded data.

4. The recording control device according to Claim 3, wherein the superimposed-video generation unit generates superimposed video data in which the route information is transparently superimposed on the imaging data.

5. The recording control device according to any one of Claims 1 to 4, wherein the route information includes at least one of traveling direction information, recommended lane information, via-point information, and destination information.

6. The recording control device according to any one of Claims 1 to 5, wherein, when the recording control unit records the imaging data not caused by an event that the event detection unit detected, the recording control unit records the imaging data as second recorded data that are allowed to be overwritten and, when the recording control unit records the imaging data caused by an event that the event detection unit detected, the recording control unit records data in which the route information is included in the imaging data as first recorded data that are prohibited from being overwritten.

7. The recording control device according to any one of Claims 1 to 6, further comprising at least either a video capturing unit configured to supply the imaging data acquisition unit with the imaging data or a sensor configured to supply the event detection unit with event occurrence information.

8. A recording device comprising:
a recording control device according to any one of Claims 1 to 7, and
at least any of a camera configured to transmit imaging data to the imaging data acquisition unit, a sensor configured to transmit information from which an event occurrence is to be detected to the event detection unit, and a recording unit through which the recording control unit records various types of data.

9. A navigation device comprising:
an imaging data acquisition unit configured to acquire imaging data obtained by capturing an outside or an inside of a vehicle;
an event detection unit configured to detect an occurrence of an event;
a route setting unit configured to specify a route to a destination of the vehicle, based on set destination information;
a route information acquisition unit configured to acquire route information for the vehicle, the route information being generated by the route setting unit; and
a recording control unit configured to, when the event detection unit detects an occurrence of an event, record data in which the route information is included in the imaging data from a first timing before the occurrence of the event to a time point at which the event occurred as first recorded data.

10. A recording method in a recording device comprising:
acquiring imaging data obtained by capturing an outside or an inside of a vehicle;
acquiring route information for the vehicle;
detecting an occurrence of an event; and
when an occurrence of an event is detected, recording data in which the route information is included in the imaging data from a first timing before the occurrence of the event to a time point at which the event occurred as first recorded data.

11. A program for causing a computer to execute the following processing of:
acquiring imaging data obtained by capturing an outside or an inside of a vehicle;
acquiring route information for the vehicle;
detecting an occurrence of an event; and
when an occurrence of an event is detected, recording data in which the route information is included in the imaging data from a first timing before the occurrence of the event to a time point at which the event occurred as first recorded data.
